# EUROPEAN PATENT APPLICATION

(11) **EP 4 624 514 A1**
(43) Date of publication of application: **01.10.2025**
(21) Application number: 23894391.4
(22) Date of filing: 02.11.2023
(51) Int. Cl.: C08G 63/78, C09D 167/08

(54) **METHOD FOR PRODUCING ALKYD RESIN, AND COATING COMPOSITION CONTAINING ALKYD RESIN OBTAINABLE THEREBY**

(30) Priority: 22.11.2022 JP 2022186340
(71) Applicant: DIC Corporation, Tokyo 174-8520 (JP)
(72) Inventor: MIOKAWA, Masazumi, Ichihara-shi, Chiba 290-8585 (JP); ODASHIMA, Takayuki, Ichihara-shi, Chiba 290-8585 (JP); TAKEUCHI, Kan, Ichihara-shi, Chiba 290-8585 (JP)
(74) Representative: Kraus & Lederer PartGmbB
(86) International application number: PCT/JP2023/039569
(87) International publication number: WO 2024/111379

(57) **Abstract**

Provided is a method for producing an alkyd resin, which can increase the amount of the polyethylene terephthalate used in the alkyd resin. Specifically, provided is a method for producing an alkyd resin containing a polyethylene terephthalate-derived structure in an amount of 20% by mass or more, in which the method includes the steps of: adding a polyhydric alcohol and a fatty acid to polyethylene terephthalate to cause a transesterification reaction, preparing a resin intermediate; and adding a polycarboxylic acid to the resin intermediate to cause an esterification reaction.

## Description

### TECHNICAL FIELD

The present invention relates to a method for producing an alkyd resin, and a coating composition containing an alkyd resin obtainable by the method.

### BACKGROUND ART

A great amount of polyethylene terephthalate is used, for example, as a material for bottles for beverages, and the used polyethylene terephthalate has been recovered and recycled.

The recovered polyethylene terephthalate is recycled, and then mainly used as a material for bottles for beverages or used in food packaging, such as egg cartons and trays for vegetables and fruits, or formed into fibers and used as fibers for clothing.

In order to improve the sustainability, efforts to expand the application of the recovered polyethylene terephthalate after recycled are made, and, for example, the use of the recovered polyethylene terephthalate as a raw material for a resin for coating composition has been proposed (for example, PTLs 1 and 2).

### CITATION LIST

### PATENT LITERATURE

PTL 1: JP2002-136021A
PTL 2: JP2004-83695A

### SUMMARY OF INVENTION

### TECHNICAL PROBLEM

The resin for coating composition of PTLs 1 and 2 has a problem in that the amount of the polyethylene terephthalate actually used in the resin is extremely small, making it difficult to achieve satisfactory recycling of the polyethylene terephthalate.

A task to be achieved by the present invention is to provide a method for producing an alkyd resin, which can increase the amount of the polyethylene terephthalate used in the alkyd resin.

Another task to be achieved by the present invention is to provide a coating composition containing an alkyd resin which uses polyethylene terephthalate in an increased amount.

### SOLUTION TO PROBLEM

The present invention is directed to a method for producing an alkyd resin and the like.
1. A method for producing an alkyd resin containing a polyethylene terephthalate-derived structure in an amount of 20% by mass or more, the method including the steps of:
   adding a polyhydric alcohol and a fatty acid to polyethylene terephthalate to cause a transesterification reaction, preparing a resin intermediate; and
   adding a polycarboxylic acid to the resin intermediate to cause an esterification reaction.
2. The method for producing an alkyd resin according to item 1 above, in which the polyethylene terephthalate is recovered polyethylene terephthalate.
3. The method for producing an alkyd resin according to item 1 or 2 above, in which the polyhydric alcohol is pentaerythritol and/or glycerol.
4. The method for producing an alkyd resin according to any one of items 1 to 3 above, in which the fatty acid is a vegetable oil fatty acid.
5. The method for producing an alkyd resin according to any one of items 1 to 4 above, in which the polycarboxylic acid is at least one member selected from sebacic acid, succinic acid, and phthalic acid.
6. The method for producing an alkyd resin according to any one of items 1 to 5 above, in which the resin intermediate has an oil length of less than 60%.
7. The method for producing an alkyd resin according to any one of items 1 to 6 above, in which, in the step of preparing the resin intermediate, the amount of the polyethylene terephthalate is 20 parts by mass or more, relative to 100 parts by mass of the total of the polyethylene terephthalate, the polyhydric alcohol, and the fatty acid.
8. The method for producing an alkyd resin according to any one of items 1 to 7 above, in which, in the step of preparing the resin intermediate, the transesterification reaction is conducted without adding a metal compound as a catalyst.
9. The method for producing an alkyd resin according to any one of items 1 to 8 above, in which the alkyd resin has an oil length of less than 60%.
10. A coating composition containing an alkyd resin obtainable by the method according to any one of items 1 to 9 above.
11. The coating composition according to item 10 above, which is a paint coating composition.
12. A coated substrate which is coated with the coating composition according to item 11 above.

### ADVANTAGEOUS EFFECTS OF INVENTION

By the present invention, there can be provided an alkyd resin which can increase the amount of the polyethylene terephthalate used.

By the present invention, there can be provided a coating composition containing an alkyd resin which uses polyethylene terephthalate in an increased amount.

### DESCRIPTION OF EMBODIMENTS

Hereinbelow, an embodiment of the present invention will be described. The following embodiments should not be construed as limiting the scope of the present invention, and can be appropriately changed or modified as long as the effects of the present invention are not sacrificed.

The compounds in the present specification may be either derived from fossil resources or derived from biological resources.

### [Method for producing an alkyd resin]

The method for producing an alkyd resin of the present invention includes the steps of: adding a polyhydric alcohol and a fatty acid to polyethylene terephthalate to cause a transesterification reaction, preparing a resin intermediate (step (1)); and adding a polycarboxylic acid to the resin intermediate to cause an esterification reaction (step (2)).

By the method for producing an alkyd resin of the present invention, an alkyd resin containing a polyethylene terephthalate-derived structure in an amount of 20% by mass or more can be produced.

The steps (1) and (2) are described below.

### (Step (1))

In the step (1), a polyhydric alcohol and a fatty acid are added to polyethylene terephthalate to cause a transesterification reaction, preparing a resin intermediate.

The polyethylene terephthalate used in the step (1) is preferably recovered polyethylene terephthalate (hereinafter, frequently referred to as "recovered PET"). The recovered PET is polyethylene terephthalate in the form of flakes or pellets, which is obtained by subjecting molded PET that has been used in food packaging, such as bottles for beverages, to treatment, such as washing, drying, pulverization, or remelting.

The recovered PET generally has a number average molecular weight in the range of from about 10,000 to about 30,000.

Examples of the polyhydric alcohols used in the step (1) include glycerol, ethylene glycol, diethylene glycol, triethylene glycol, dipropylene glycol, neopentyl glycol, 2,2,4-trimethyl-1,3-pentanediol, 1,2-propanediol, 1,3-propanediol, 1,3-butanediol, 1,4-butanediol, 2,3-butanediol, 1,5-pentanediol, 1,6-hexanediol, 2,2-dimethyl-1,3-propanediol, 1,4-cyclohexanedimethanol, 1,2-cyclohexanedimethanol, 1,3-cyclohexanedimethanol, trimethylene glycol, tetramethylene glycol, pentamethylene glycol, hexamethylene glycol, tetraethylene glycol, trimethylolethane, trimethylolpropane, trimethylolhexane, triethylolpropane, 1,2,4-butanetriol, and pentaerythritol.

With respect to the polyhydric alcohol used, a single polyhydric alcohol may be used, or two or more polyhydric alcohols may be used in combination.

The polyhydric alcohol is preferably pentaerythritol and/or glycerol.

With respect to the above-mentioned polyhydric alcohol, there is one which is derived from biomass, and such a polyhydric alcohol can increase the biomass degree of the obtained alkyd resin.

The fatty acid used in the step (1) is preferably a vegetable oil fatty acid, more preferably at least one vegetable oil fatty acid selected from castor oil fatty acid, tall oil fatty acid, palm oil fatty acid, coconut oil fatty acid, soybean oil fatty acid, cacao fatty acid, corn oil fatty acid, linseed oil fatty acid, cottonseed oil fatty acid, rapeseed oil fatty acid, and rice bran fatty acid.

**In** the step (1), instead of the fatty acid, an oil containing the fatty acid can be used.

When an oil is used as the fatty acid in the step (1), the oil is preferably a vegetable oil, more preferably at least one vegetable oil selected from castor oil, tall oil, palm oil, coconut oil, soybean oil, cacao butter, corn oil, linseed oil, cottonseed oil, rapeseed oil, and rice oil.

The vegetable oil is a glyceride having a fatty acid and glycerol which are bonded through an ester linkage, and the vegetable oil can be used in the form of a mixture of a fatty acid and a polyhydric alcohol.

**In** the step (1), the ratio of the polyethylene terephthalate, polyhydric alcohol, and fatty acid charged is preferably controlled so that the obtained resin intermediate has an oil length of less than 60%. Specifically, the amount of the fatty acid charged can be less than 60 parts by mass, in terms of the amount of an oil, relative to 100 parts by mass of the total of the polyethylene terephthalate, polyhydric alcohol, and fatty acid.

The oil length of the resin intermediate obtained in the step (1) is preferably 55% or less, 50% or less, and 40% or less in this order. With respect to the lower limit of the oil length of the resin intermediate, there is no particular limitation, but the lower limit of the oil length is, for example, 20%.

The oil length of the resin intermediate corresponds to a ratio of the amount of the fatty acid charged, in terms of the amount of an oil, to 100 parts by mass of the total of the polyethylene terephthalate, polyhydric alcohol, and fatty acid.

**In** the step (1), the amount of the polyethylene terephthalate charged is preferably 20 parts by mass or more, preferably 25 parts by mass or more, more preferably 30 parts by mass or more, relative to 100 parts by mass of the total of the polyethylene terephthalate, the polyhydric alcohol, and the fatty acid.

With respect to the upper limit of the amount of the polyethylene terephthalate charged, there is no particular limitation, but the upper limit is, for example, 60 parts by mass.

In the step (1), the amount of the polyhydric alcohol charged is preferably in the range of from 10 to 30 parts by mass, more preferably in the range of from 14 to 26 parts by mass, relative to 100 parts by mass of the total of the polyethylene terephthalate, the polyhydric alcohol, and the fatty acid.

With respect to the reaction conditions for the transesterification reaction in the step (1), known reaction conditions can be employed, and, for example, conditions can be set such that the reaction temperature is in the range of from 100 to 400°C (preferably from 200 to less than 280°C) and the reaction time is in the range of from 1 to 20 hours.

It has been known that, in the transesterification reaction, an oxide, a hydroxide, an inorganic acid salt, an organic acid salt (e.g., a carboxylate), a halide, a sulfide, or the like of a metal (e.g., lithium, zinc, calcium, lead, barium, manganese, cobalt, zirconium, germanium, antimony, titanium, or tin) is generally used as a catalyst.

However, in the step (1) in the present invention, it is preferred that a metal compound as a catalyst is not added. In the present invention, a reaction can satisfactorily proceed due to both a combination of alcoholysis caused by a polyhydric alcohol and acidolysis caused by a fatty acid and the effect of transesterification of an ester compound formed by a reaction of a polyhydric alcohol and a fatty acid even when a large amount of polyethylene terephthalate is used. When a metal compound catalyst is not added, the amount of the rare metal used can be reduced, and this can contribute to the sustainability.

The resin intermediate obtained in the step (1) has a number average molecular weight, for example, in the range of from 100 to 5,000, preferably in the range of from 500 to 3,000, more preferably in the range of from 500 to 2,000.

The resin intermediate obtained in the step (1) has a weight average molecular weight, for example, in the range of from 500 to 30,000, preferably in the range of from 1,000 to 20,000, more preferably in the range of from 1,000 to 12,000.

Each molecular weight of the resin intermediate is determined by the method described in the Examples below.

The resin intermediate obtained in the step (1) has an acid value, for example, in the range of 10 or less.

The acid value of the resin intermediate is determined by the method described in the Examples below.

### (Step (2))

In the step (2), a polycarboxylic acid is added to the resin intermediate prepared in the step (1) to cause an esterification reaction.

Examples of the polycarboxylic acids used in the step (2) include phthalic acid, isophthalic acid, terephthalic acid, 1,4-cyclohexanedicarboxylic acid, 1,3-cyclohexanedicarboxylic acid, hexahydrophthalic acid, maleic acid, fumaric acid, succinic acid, adipic acid, sebacic acid, azelaic acid, trimellitic acid, and pyromellitic acid.

With respect to the polycarboxylic acid, a polycarboxylic acid derivative, such as an anhydride, can be used. Further, with respect to the polycarboxylic acid used, a single polycarboxylic acid may be used, or two or more polycarboxylic acids may be used in combination.

The polycarboxylic acid is preferably at least one member selected from succinic acid, sebacic acid, and phthalic acid (including phthalic anhydride).

With respect to the above-mentioned polycarboxylic acid, there is one which is derived from biomass, and such a polycarboxylic acid can increase the biomass degree of the obtained alkyd resin.

In the step (2), the ratio of the resin intermediate and polycarboxylic acid charged is, for example: the resin intermediate:polycarboxylic acid (mass ratio) = 60:40 to 100:0; preferably: the resin intermediate:polycarboxylic acid (mass ratio) = 60:40 to 95:5; more preferably: the resin intermediate:polycarboxylic acid (mass ratio) = 70:30 to 90: 10.

With respect to the reaction conditions for the esterification reaction in the step (2), known reaction conditions can be employed, and, for example, conditions can be set such that the reaction temperature is in the range of from 100 to 300°C and the reaction time is in the range of from 1 to 10 hours.

In the esterification reaction, there is preferably used a solvent which can form an azeotrope together with water formed during the esterification reaction to remove the water from the reaction system, and, for example, xylene can be used.

The alkyd resin obtainable by the method of the present invention (hereinafter, frequently referred to as "the alkyd resin of the present invention") contains a polyethylene terephthalate-derived structure in an amount of 20% by mass or more. The expression that the alkyd resin "contains a polyethylene terephthalate-derived structure in an amount of 20% by mass or more" means that the amount of the polyethylene terephthalate is 20 parts by mass or more, relative to 100 parts by mass of the total of the reaction raw materials used in the production of the alkyd resin (such as polyethylene terephthalate, a polyhydric alcohol, a fatty acid, and a polycarboxylic acid). The amount of the polyethylene terephthalate-derived structure contained in the alkyd resin of the present invention is preferably 25% by mass or more, more preferably 30% by mass or more.

**In** the present invention, the term "reaction raw materials" means raw materials constituting the structure of the alkyd resin, and means that the reaction raw materials do not include components that do not form the structure of the alkyd resin, such as a solvent and a catalyst.

The fact that the alkyd resin contains a polyethylene terephthalate-derived structure in an amount of 20% by mass or more can also be determined by analyzing the alkyd resin by ¹H-NMR spectrum or ¹³C-NMR.

With respect to the upper limit of the amount of the polyethylene terephthalate-derived structure in the alkyd resin of the present invention, there is no particular limitation, but the upper limit is, for example, 60% by mass or less, preferably 50% by mass or less, more preferably 45% by mass or less.

The alkyd resin of the present invention has a number average molecular weight, for example, in the range of from 1,000 to 10,000, preferably in the range of from 1,000 to 5,000, more preferably in the range of from 1,000 to 4,000.

The alkyd resin of the present invention has a weight average molecular weight, for example, in the range of from 1,000 to 100,000, preferably in the range of from 1,000 to 100,000, more preferably in the range of from 8,000 to 100,000.

Each molecular weight of the alkyd resin is determined by the method described in the Examples below.

The alkyd resin of the present invention has an acid value, for example, in the range of 20 mg KOH/g or less.

The acid value of the alkyd resin is determined by the method described in the Examples below.

The alkyd resin of the present invention has a hydroxyl value, for example, in the range of from 50 to 300 mg KOH/g.

The hydroxyl value of the alkyd resin is determined by the method described in the Examples below.

The alkyd resin of the present invention has an oil length of, for example, less than 60%, preferably 55% or less, more preferably 50% or less, further preferably less than 45%. The lower limit of the oil length of the alkyd resin of the present invention is, for example, 20% or more.

The oil length of the alkyd resin means a ratio, indicated by a percentage by mass, of the amount of the fatty acid charged, in terms of the amount of an oil, to the total mass of the reaction components used in the production of the alkyd resin.

The alkyd resin of the present invention is an alkyd resin containing a polyethylene terephthalate-derived structure in an amount of 20% by mass or more, and can promote recycling of the recovered polyethylene terephthalate. Further, when the polyhydric alcohol is pentaerythritol and/or glycerol, the fatty acid is a vegetable oil fatty acid, and the polycarboxylic acid is sebacic acid and/or succinic acid, the reaction raw materials for the alkyd resin can be composed only of a recycled raw material-derived component (recovered polyethylene terephthalate) and biomass raw material-derived components (polyhydric alcohol, fatty acid, and polycarboxylic acid), and this can strongly contribute to the sustainability.

### [Coating composition]

The alkyd resin of the present invention can be used, for example, as a binder resin for the coating composition, and is preferably used as a binder resin for a paint coating composition.

### (Curing agent)

When the coating composition of the present invention is used as a paint coating composition, the paint coating composition of the present invention contains the alkyd resin of the present invention and a curing agent. With respect to the curing agent, a known curing agent can be used, and, for example, a melamine resin, an epoxy compound, or the like can be used.

The melamine resin as a curing agent is preferably a melamine resin having a structure derived from a melamine compound having a hydroxymethyl group and/or an alkoxymethyl group.

With respect to the melamine resin which is a curing agent, a commercially available melamine resin can be used, and examples of the commercially available melamine resins include CYMEL 300, CYMEL 301, CYMEL 303LF, CYMEL 350, CYMEL 370N, CYMEL 771, CYMEL 325, CYMEL 327, CYMEL 703, CYMEL 712, CYMEL 701, CYMEL 266, CYMEL 267, CYMEL 285, CYMEL 232, CYMEL 235, CYMEL 236, CYMEL 238, CYMEL 272, CYMEL 212, CYMEL 253, CYMEL 254, CYMEL 202, CYMEL 207, MYCOAT 506 (each of which is manufactured by Allnex Japan Inc.); NIKALAC MW-30M, NIKALAC MW-30, NIKALAC MW-30HM, NIKALAC MW-390, NIKALAC MW-100LM, NIKALAC MX-750LM, NIKALAC MW-22, NIKALAC MS-21, NIKALAC MS-11, NIKALAC MW-24X, NIKALAC MS-001, NIKALAC MX-002, NIKALAC MX-730, NIKALAC MX-750, NIKALAC MX-708, NIKALAC MX-706, NIKALAC MX-042, NIKALAC MX-035, NIKALAC MX-45, NIKALAC MX-43, NIKALAC MX-417, NIKALAC MX-410 (each of which is manufactured by Sanwa Chemical Co., Ltd.); U-VAN 20SB, U-VAN 20SE60, U-VAN 21R, U-VAN 22R, U-VAN 122, U-VAN 125, U-VAN 220, U-VAN 225, U-VAN 228, U-VAN 2020 (each of which is manufactured by Mitsui Chemicals, Inc.); and AMIDIR J-820-60, AMIDIR L-109-65, AMIDIR L-117-60, AMIDIR L-127-60, AMIDIR 13-548, AMIDIR G-821-60, AMIDIR L-110-60, AMIDIR L-125-60, AMIDIR L-166-60B (each of which is manufactured by DIC Corporation).

The epoxy compound as a curing agent is preferably an epoxy compound having two or more epoxy groups per molecule.

Specific examples of the epoxy compounds, which are a curing agent, include a cresol novolak epoxy resin, a phenolic novolak epoxy resin, a biphenyl epoxy resin, a bisphenol A epoxy resin, a bisphenol F epoxy resin, a naphthalene epoxy resin, a dicyclopentadiene epoxy resin, a linear aliphatic epoxy resin, an alicyclic epoxy resin, a heterocyclic epoxy resin, and a spiro ring-containing epoxy resin.

As a curing agent other than the melamine resin and epoxy compound, an isocyanate compound, or a dryer, such as metallic soap, can be used. The isocyanate compound as a curing agent is preferably a polyfunctional isocyanate compound, more preferably a polyfunctional isocyanate compound having 2 to 6 reactive isocyanate groups per molecule.

With respect to the curing agent contained in the paint coating composition, a single curing agent may be used, or two or more curing agents may be used in combination.

The amount of the curing agent contained in the paint coating composition is, for example, in the range of from 3 to 40 parts by mass, preferably in the range of from 10 to 35 parts by mass, more preferably in the range of from 20 to 30 parts by mass, relative to 100 parts by mass of the total of the nonvolatile components of the paint coating composition.

### (Pigment particles)

The paint coating composition of the present invention preferably contains pigment particles.

Specific examples of the pigment particles include white pigments, such as titanium oxide (titanium white), zinc oxide (zinc white), basic lead carbonate, basic lead sulfate, lead sulfate, lithopone, zinc sulfide, and antimony white; black pigments, such as carbon black, acetylene black, lamp black, graphite, iron black (black iron oxide), and aniline black; yellow pigments, such as naphthol yellow S, Hansa yellow, pigment yellow L, benzidine yellow, permanent yellow, and yellow iron (yellow iron oxide); orange pigments, such as chrome orange, chrome vermilion, and permanent orange; brown pigments, such as iron oxide and amber; red pigments, such as red iron oxide, minium, permanent red, a quinacridone red pigment, and a diketo-pyrrolo-pyrrole red pigment; violet pigments, such as cobalt violet, fast violet, and methyl violet lake; blue pigments, such as ultramarine blue, Prussian blue, cobalt blue, phthalocyanine blue, and indigo; and green pigments, such as chrome green, pigment green B, and phthalocyanine green.

The pigment particles may contain a loading pigment.

Specific examples of the loading pigments include a baryta powder, barium sulfate, barium carbonate, calcium carbonate, gypsum, clay, silica, white carbon, diatomaceous earth, talc, magnesium carbonate, water-containing magnesium silicate, alumina white, gloss white, and a mica powder.

With respect to the size of the pigment particles (such as a particle diameter), there is no particular limitation. The size of the pigment particles may be appropriately selected according to the purpose of the pigment used. The pigment particles preferably have an average particle diameter of 0.1 to 10 µm, more preferably 0.1 to 7 µm.

With respect to the pigment particles contained in the paint coating composition, a single type of pigment particles may be used, or two or more types of pigment particles may be used in combination.

The amount of the pigment particles contained in the paint coating composition is, for example, in the range of from 10 to 70 parts by mass, preferably in the range of from 30 to 60 parts by mass, relative to 100 parts by mass of the total of the nonvolatile components of the paint coating composition.

### (Solvent)

The paint coating composition of the present invention is generally diluted with a solvent before being used.

Specific examples of the solvents include aromatic hydrocarbon solvents, such as toluene and xylene; alcohol solvents, such as methanol, ethanol, isopropyl alcohol, n-butanol, isobutanol, tert-butanol (2-methyl-2-propanol), tert-amyl alcohol, and diacetone alcohol; ketone solvents, such as acetone, methyl ethyl ketone, methyl isobutyl ketone, and cyclohexanone; ester solvents, such as dimethyl carbonate, ethyl acetate, propyl acetate, butyl acetate, isobutyl acetate, butyl Cellosolve, and PGMAC; and hydrocarbon solvents, such as T-SOL-100FLUID, T-SOL-150FLUID, and PEGASOL 3040.

The paint coating composition of the present invention may further contain a curing accelerator (such as a curing catalyst), a surfactant, a leveling agent, a thixotropic agent, an ultraviolet light absorber, a light stabilizer, a dispersant, or the like, in addition to the above-mentioned components.

The form of the paint coating composition of the present invention may be either of a one-pack type or of a two-pack type, and can be appropriately selected according to the purpose and use.

The paint coating composition of the present invention is applied to a substrate, the solvent is dried, and further heat-curing is performed, and then an article having a coating film can be produced.

With respect to the method for application, there is no particular limitation, and examples of the methods include spraying, brushing, and rolling. In the application of the composition, a coating apparatus or a printing apparatus may be used.

The temperature and time for heat-curing may be appropriately selected as long as the substrate suffers no deformation or the like. The temperature is, for example, room temperature to 180°C, and the time is, for example, 10 minutes to 24 hours. Examples of methods for heat-curing include methods using hot air or a drying oven (dryer) provided in a coating machine.

With respect to the coating weight of the paint coating composition, there is no particular limitation, and the coating weight may be appropriately controlled so that, for example, the resultant coating film has a thickness, e.g., in the range of from 10 to 1,000 µm.

### EXAMPLES

Hereinbelow, the present invention will be described in detail with reference to the following Examples and Comparative Example.

The following Examples should not be construed as limiting the scope of the present invention.

In the Examples of the present invention, the acid value and hydroxyl value are values evaluated by the following method.

### [Method for measuring an acid value]

An acid value was measured by the method in accordance with JIS K0070-1992.

### [Method for measuring a hydroxyl value]

A hydroxyl value was measured by the method in accordance with JIS K0070-1992.

In the Examples of the present invention, the number average molecular weight of an alkyd resin is a value as measured by GPC using a calibration curve obtained from standard polystyrene, and conditions for the measurement are as shown below.

### [Conditions for GPC measurement]

Measuring apparatus: HLC-8320GPC, manufactured by Tosoh Corp.
Columns: TSK-GUARDCOLUMN HXL-H, manufactured by Tosoh Corp.
   + TSK-GEL G5000HXL, manufactured by Tosoh Corp.
   + TSK-GEL G4000HXL, manufactured by Tosoh Corp.
   + TSK-GEL G3000HXL, manufactured by Tosoh Corp.
   + TSK-GEL G2000HXL, manufactured by Tosoh Corp.
Detector: RI (differential refractometer)
Data processing: HLC-8320GPC EcoSEC-Work Station, manufactured by Tosoh Corp.
Conditions for measurement:
   Column temperature: 40°C
   Developing solvent: Tetrahydrofuran
   Flow rate: 1.0 mL/minute
Sample for measurement: A 0.5% by mass tetrahydrofuran solution, in terms of the amount of the resin solids, which has been subjected to filtration using a microfilter
Sample amount per injection: 100 µl
Standard sample: In accordance with the measurement manual of the "HLC-8320GPC" above, the below-shown monodisperse polystyrenes having known molecular weights were used.
Standard: A calibration curve was prepared using monodisperse polystyrenes (A-500, F-2, F-20, F-80, F-288, A-2500, F-10, F-40, F-128, F-380, manufactured by Tosoh Corp.).

### (Example 1: Production of an alkyd resin and preparation and evaluation of a paint coating composition)

106.4 Parts by mass of rice bran fatty acid, 75.6 parts by mass of tall oil fatty acid, 161.2 parts by mass of polyethylene terephthalate, and 90.8 parts by mass of pentaerythritol (biomass-derived) were charged into a four-neck reaction vessel, and subjected to reaction at 250°C for 3 hours, producing a resin intermediate.

The obtained resin intermediate had an acid value of 2 mg KOH/g, an oil length of 47%, and a number average molecular weight of 800.

The polyethylene terephthalate used in Example 1 is recovered PET (manufactured by FP Corporation).

The reaction system containing the resin intermediate was cooled to 160°C, and then 65.3 parts by mass of sebacic acid was further charged, and the resultant mixture was subjected to reaction at 180°C for 10 hours. An analysis for the process was conducted with respect to the alkyd resin/xylene = 50/50 (mass ratio) solution, and the reaction was completed at the time when the acid value became 6 mg KOH/g or less, and the obtained alkyd resin was diluted with butyl acetate to prepare an alkyd resin solution (nonvolatile content: 65% by mass).

The obtained alkyd resin had an oil length of 38%, an acid value of 8, and a number average molecular weight of 2,100.

A melamine resin ("AMIDIR L-109-65", manufactured by DIC Corporation) as a curing agent was added to the obtained alkyd resin solution so that the alkyd resin:melamine resin (mass ratio) became 75:25, and titanium oxide ("Ti-Pure R-960", manufactured by The Chemours Company) was further added to prepare an enamel paint coating composition (nonvolatile content: 71% by mass; pigment mass concentration: 60%).

The obtained enamel paint coating composition was applied using an applicator onto a chromate-treated galvanized steel plate having a thickness of 0.5 mm to form an enamel coating film having a thickness of 76 µm. The steel plate having the enamel coating film formed thereon was heated in an oven at 130°C for 20 minutes, obtaining a steel plate having a top coat layer with a dry thickness of 26 µm.

With respect to the obtained coated steel plate, the following evaluations were conducted. The results are shown in Table 1.

### (Gloss value)

With respect to the obtained coated steel plate, a 60-degree specular reflectance was measured.

### (Adhesion to the substrate)

With respect to the obtained coated steel plate, adhesion to the substrate was evaluated in accordance with JIS K-5600. Specifically, the coating film was cut using a cutter in a lattice pattern with a width of 1 mm so that the number of squares in the lattice pattern was 100, and a cellophane adhesive tape was put to cover the whole of the lattice pattern in the coating film, and then quickly peeled off the film. The number of the remaining squares which adhered to the steel plate after the test was determined, in terms of a percentage.

With respect to the adhesion to the substrate, "100%" means that the coating film had no removed portion, and "0%" means that all the coating film was removed. When 95% or more of the remaining coating film was observed, such a paint coating composition can be regarded as having reasonable performance from a practical point of view.

### (Pencil hardness)

With respect to the coated surface of the steel plate, a pencil hardness of the coated portion of the coated steel plate was measured in accordance with JIS K-5600.

### (DuPont impact)

In accordance with JIS K5600, an impactor having a hemispherical tip with a radius of 6.3 mm was allowed to stay still on the coated surface of the obtained coated steel plate, and a weight having a load of 500 g was permitted to fall onto the impactor from a height of 30 cm, 35 cm, 40 cm, 45 cm, and 50 cm. The height at which a crack was caused is shown in Table 1. In the case where even a fall of the weight from a height of 50 cm caused no sheet crack, the result is indicated by ">50 cm".

### (Example 2: Production of an alkyd resin and preparation and evaluation of a paint coating composition)

106.4 Parts by mass of rice bran fatty acid, 75.6 parts by mass of tall oil fatty acid, 161.2 parts by mass of recovered PET, and 96.5 parts by mass of pentaerythritol (biomass-derived) were charged into a four-neck reaction vessel, and subjected to reaction at 250°C for 3 hours, producing a resin intermediate.

The obtained resin intermediate had an acid value of 3 mg KOH/g, an oil length of 45%, and a number average molecular weight of 700.

The reaction system containing the resin intermediate was cooled to 160°C, and then 80.8 parts by mass of phthalic anhydride was further charged, and the resultant mixture was subjected to reaction at 180°C for 10 hours. An analysis for the process was conducted with respect to the alkyd resin/xylene = 50/50 (mass ratio) solution, and the reaction was completed at the time when the acid value of the alkyd resin became 6 mg KOH/g or less, and the obtained alkyd resin was diluted with xylene to prepare an alkyd resin solution (nonvolatile content: 65% by mass).

The obtained alkyd resin had an oil length of 40%, an acid value of 9 mg KOH/g, and a number average molecular weight of 1,700.

The polyethylene terephthalate used in Example 2 is recovered PET (manufactured by Utsumi Recycle Systems Inc.).

Using the obtained alkyd resin, an enamel paint coating composition was prepared in the same manner as in Example 1, and a coated steel plate was produced in the same manner as in Example 1 and evaluated. The results are shown in Table 1.

### (Comparative Example 1: Production of an alkyd resin and preparation and evaluation of a paint coating composition)

106.4 Parts by mass of rice bran fatty acid, 67.7 parts by mass of tall oil fatty acid, 120.6 parts by mass of glycerol, 7.7 parts by mass of pentaerythritol (biomass-derived), and 189.7 parts by mass of phthalic anhydride were charged into a four-neck reaction vessel, and subjected to reaction at 210°C for 6 hours. An analysis for the process was conducted with respect to the alkyd resin/xylene = 50/50 (mass ratio) solution, and the reaction was completed at the time when the acid value of the alkyd resin became 3 mg KOH/g or less, and the obtained alkyd resin was diluted with xylene to prepare an alkyd resin solution (nonvolatile content: 60% by mass).

The obtained alkyd resin had an oil length of 40%, an acid value of 4 mg KOH/g, and a number average molecular weight of 2,400.

Using the obtained alkyd resin, an enamel paint coating composition was prepared in the same manner as in Example 1, and a coated steel plate was produced in the same manner as in Example 1 and evaluated. The results are shown in Table 1.

**[Table 1]**

| | Example 1 | Example 2 | Comparative Example 1 |
|---|---|---|---|
| Thickness [µm] | 26 | 23 | 24 |
| Gloss 60° | 80 | 76 | 81 |
| DuPont impact | >50 cm | 45 cm | 45 cm |
| Pencil hardness | H | 2H | 2H |
| Lattice pattern cutting test | 100/100 | 100/100 | 100/100 |

From the results shown in Table 1, it is found that, despite containing a PET-derived structure in a high ratio, the alkyd resin in the paint coating composition in each of Examples 1 and 2 achieved practically excellent performance comparable to that in Comparative Example 1 which uses the alkyd resin containing no PET-derived structure.

Especially, with respect to the alkyd resin in Example 1, the reaction components are composed only of a biomass-derived component and a recycled material-derived component, and the alkyd resin has excellent sustainability.

## Claims

1. A method for producing an alkyd resin containing a polyethylene terephthalate-derived structure in an amount of 20% by mass or more, the method comprising the steps of:
adding a polyhydric alcohol and a fatty acid to polyethylene terephthalate to cause a transesterification reaction, preparing a resin intermediate; and
adding a polycarboxylic acid to the resin intermediate to cause an esterification reaction.

2. The method for producing an alkyd resin according to claim 1, wherein the polyethylene terephthalate is recovered polyethylene terephthalate.

3. The method for producing an alkyd resin according to claim 1 or 2, wherein the polyhydric alcohol is pentaerythritol and/or glycerol.

4. The method for producing an alkyd resin according to claim 1 or 2, wherein the fatty acid is a vegetable oil fatty acid.

5. The method for producing an alkyd resin according to claim 1 or 2, wherein the polycarboxylic acid is at least one member selected from sebacic acid, succinic acid, and phthalic acid.

6. The method for producing an alkyd resin according to claim 1 or 2, wherein the resin intermediate has an oil length of less than 60%.

7. The method for producing an alkyd resin according to claim 1 or 2, wherein, in the step of preparing the resin intermediate, the amount of the polyethylene terephthalate is 20 parts by mass or more, relative to 100 parts by mass of the total of the polyethylene terephthalate, the polyhydric alcohol, and the fatty acid.

8. The method for producing an alkyd resin according to claim 1 or 2, wherein, in the step of preparing the resin intermediate, the transesterification reaction is conducted without adding a metal compound as a catalyst.

9. The method for producing an alkyd resin according to claim 1 or 2, wherein the alkyd resin has an oil length of less than 60%.

10. A coating composition containing an alkyd resin obtainable by the method according to claim 1 or 2.

11. The coating composition according to claim 10, which is a paint coating composition.

12. A coated substrate which is coated with the coating composition according to claim 11.
